(19)

Europäisches
Patentamt
European
Patent Office
Office européen
des brevets

(11) **EP 2 104 851 B1**

(12) **EUROPEAN PATENT SPECIFICATION**

(45) Date of publication and mention
of the grant of the patent:
**22.08.2018 Bulletin 2018/34**

(21) Application number: **06842813.5**

(22) Date of filing: **29.12.2006**

(51) Int Cl.:
**G01N 29/24** *(2006.01)*    **G01N 29/44** *(2006.01)*

(86) International application number:
**PCT/IT2006/000885**

(87) International publication number:
**WO 2008/081484 (10.07.2008 Gazette 2008/28)**

(54) **A METHOD FOR THE ULTRASONIC INSPECTION OF METAL COMPONENTS BY A SYNTHETIC APERTURE FOCUSING TECHNIQUE**

VERFAHREN ZUR ULTRASCHALL-INSPEKTION VON METALLKOMPONENTEN MITTELS SAFT (SYNTHETIC APERTURE FOCUSING TECHNIQUE)

PROCÉDÉ POUR L'EXAMEN ULTRASONIQUE DE COMPOSANTS MÉTALLIQUES PAR UNE TECHNIQUE DE FOCALISATION PAR OUVERTURE SYNTHÉTIQUE

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**30.09.2009 Bulletin 2009/40**

(73) Proprietor: **ANSALDO ENERGIA S.P.A.**
**16152 Genova (IT)**

(72) Inventors:
• **PIGNONE, Enrico**
**I-16010 Rossiglione (IT)**

• **PASTORINO, Matteo**
**I-16010 Rossiglione (IT)**

(74) Representative: **Bernotti, Andrea et al**
**Studio Torta S.p.A.**
**Via Viotti, 9**
**10121 Torino (IT)**

(56) References cited:
**US-A- 5 549 002     US-A- 6 128 092**
**US-B1- 6 877 376**

**Description**

TECHNICAL FIELD

The present invention relates to a method for the ultrasonic inspection of metal components by a synthetic aperture focusing technique.

BACKGROUND ART

As it is known, in many industrial fields, it is fundamental to have non-destructive inspection techniques that allow to check the structural integrity of metal components, which form critical parts of a system subjected to particular stress. For instance, in the field of electric power plants, the large size rotors typically employed in machines such as steam and gas turbines or alternators, need to be subjected to inspections not only before set-up, but also after determined operation times, in order to prevent breakdowns which, although infrequent, may have disastrous effects.

Inspection techniques based on the use of ultrasounds (so-called "endosonic" or "boresonic" instrumentation), which allow the analysis of the integrity in an absolutely non-invasive manner, have been developed for this purpose.

Substantially, a scan of the metal component is carried out using ultrasonic probes mounted on mobile heads. The echo signals captured by the probes are processed in order to identify in the material possible discontinuities associated to defects or breaks.

Techniques directed to the elimination or at least the reduction of the contribution of the background by exploiting correlations between measurements performed from different positions have been designed, as well as processes that allow to identify "macroscopic" elements detectable, for example, by the envelope of the received signals. Specifically, the synthetic aperture focusing techniques (SAFTs) provide that a scan of the examined metal component be carried out by performing measurements at distances displaying a constant length along a scanning path. At each position on the path, the captured signal is sampled and stored in an indexed vector, which is normally termed A-SCAN. A predetermined number of vectors A-SCAN corresponding to adjacent positions defines a synthetic array. The correlations between adjacent vectors A-SCAN are dependant on the fact that the radiation diagrams corresponding to side positions in the synthetic array are at least partially overlapped to one another and to the radiation diagram corresponding to the central position. Substantially, the same points are therefore visible from several positions of the array itself, although from different angles and distances. Therefore, the same discontinuity causes echoes which are sensed with different delays according to the position of the probe in the array and to the depth at which the discontinuity is located.

The synthetic array is focused at a determined depth, i.e. the vectors A-SCAN are temporally realigned by introducing delays which are dependant on the position of the probe in the synthetic array and on the focusing depth (substantially, a translation of the samples of each vector A-SCAN is performed by an index transformation). Subsequently, a mean operation is performed allowing to eliminate the reciprocally inconsistent background components, whereas the useful signal contributions are summed and are revealed. The vector resulting from the mean operation is associated to the central position of the synthetic array.

A problem associated to the use of the SAFT techniques is the selectivity of the focusing. The realignment renders the mean operation significant only at around the focusing depth, whereas at different depths the samples of the vectors A-SCAN having the same index (i.e. the samples that are summed in the mean operation) are not actually temporally correlated. As it is impossible to extract useful information at depths other than the focusing depth, the conventional SAFT techniques may in practice only be exploited to obtain a better definition of defects already detected by other methods. For computational load reasons it is instead not advantageous to extensively apply the known SAFT techniques, for example, for the purpose of identifying previously unknown defects. Indeed, for each position of the synthetic array along the scanning path, the entire focusing process (alignment and mean, as well as possible further accessory operations) would have to be repeated for different depth values and would therefore require excessively long processing times.

US 5 549 002 A discloses a method of ultrasonic inspection of metal parts by synthetic aperture focusing (SAFT) in which ultrasound is transmitted and received and in which the phase translation of each A-scan element is correlated to a position of the element in the series of elements forming the respective first vector of the synthetic array. Other examples of known method of inspection of metal parts are disclosed in US 6 877 376 B1 and in US 6 128 092 A.

DISCLOSURE OF INVENTION

Therefore, it is the object of the present invention to develop a method for the ultrasonic inspection of metal components by a synthetic aperture focusing technique, which does not display the above described drawbacks.

According to the present invention, there is developed a method for the ultrasonic inspection of metal components by a synthetic aperture focusing technique according to claim 1.

BRIEF DESCRIPTION OF THE DRAWINGS

The present invention will now be described with reference to the accompanying drawings, which illustrate some non-limitative examples of embodiment, in which:

- figure 1a is a longitudinally sectioned simplified side view of a rotor of a steam turbine;
- figure 1b is a front view of the rotor in figure 1a, sectioned along the plane of line IB-IB in figure 1a;
- figure 2 is a diagram schematically showing signals corresponding to the method according to the present invention and vectors deriving from the sampling of such signals;
- figures 3 and 4 are diagrams showing signals corresponding to the method according to the present invention and correspondences between such signals and positions in the rotor in figures 1a and 1b;
- figure 5 is a diagram schematically showing visible volumes of an ultrasonic probe in different detection positions;
- figure 6 is a simplified flow chart corresponding to the method according to the present invention;
- figures 7a and 7b schematically show a simplified radiation diagram of an ultrasonic probe employed in the present method;
- figure 8 is a more detailed flow chart of a first portion of the flow chart in figure 6;
- figure 9 is a diagram schematically showing signals corresponding to the method according to the present invention;
- figure 10 shows a portion of the view in figure 1b, which is enlarged and provided with position references;
- figure 11 is a more detailed flow chart of a second.portion of the flow chart in figure 6;
- figure 12 is a diagram showing sizes corresponding to the method according to the present invention;
- figure 13 is a more detailed flow chart of a third portion of the flow chart of figure 6;
- figure 14 shows a portion of the view in figure 1b, which is enlarged and provided with position and angle references; and
- figure 15 shows a portion of the view in figure 1a, which is enlarged and provided with position and angle references.

BEST MODE FOR CARRYING OUT THE INVENTION

In the following description, reference will specifically be made to the use of the invention for the inspection of a hollow axis rotor of a steam turbine. This should although not be considered limitative, because the invention may advantageously be exploited for the inspection of metal components of any kind, especially alternator axes and gas turbine disks.

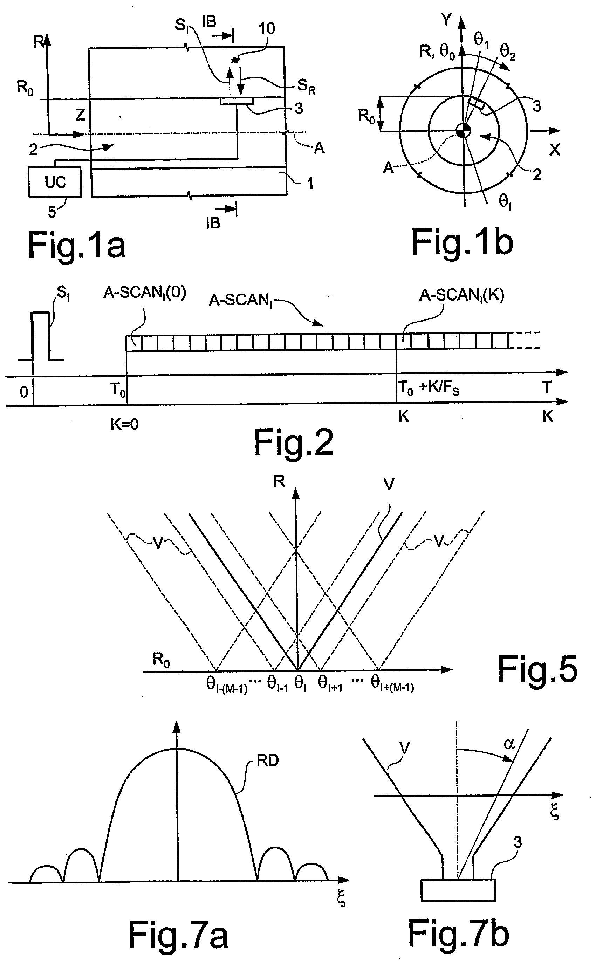

Figures 1a, 1b schematically show a rotor 1 of a steam turbine, which is not shown in detail here. An inspection bore 2, having radium $R_0$, extends around an axis A of the rotor 1 and is accessible from outside. Ultrasonic probes 3, which are controlled by an external control unit 5, are introduced in the inspection bore 2 by means of mounting elements, which are known and not shown, and are displaced through a plurality of detection positions along a predetermined scanning path. For the sake of simplicity, reference will be made to a single probe 3 in the following of the description, without this being considered limitative.

In the example described herein, the probe 3 covers a helicoidal path in contact with the surface of the inspection bore 2 at an increasing distance from the entrance of the inspection bore 2 itself. The detection positions along the path are uniformly angularly distanced and are identified by respective detection angles $\theta_0$, $\theta_1$, $\theta_2$, ..., $\theta_I$ (figura 1b).

At each generic detection position $\theta_I$, the probe 3 is guided by the control unit 5 so as to alternatively emit ultrasonic inspection signals $S_I$ towards the body of the rotor 1 and receive return signals $S_R$, possibly containing echoes reflected by discontinuities 10 in the rotor 1 (substantially, after the transmission of inspection signals $S_I$, the probe 3 is set in reception for a predetermined time). The return signals $S_R$ are sampled with a sampling frequency $F_S$ and stored in a control unit 5 in the form of indexed vectors A-SCAN$_I$ (see figure 2). More specifically, a vector A-SCAN$_I$ is defined by the series of samples acquired during a measurement at the detection position $\theta_I$ and the generic element of the vector A-SCAN$_I$, obtained at the K-th sampling time $K/F_S$, is indicated by A-SCAN$_I$(K). The vectors A-SCAN$_I$ are therefore temporally sorted and index K, which defines the position of each element A-SCAN$_I$(K) in the series forming the respective vector A-SCAN$_I$, is also representative of the depth the possible echo signal is referred to. For the sake of simplicity, in figure 2 the origin of the time axis coincides with the inspection signal emission time $S_I$. In figure 2, the origin of the abscissa axis K (K = 0) coincides with the time at which the first sample of the return signal $S_R$ is taken (at time $T = T_0$ and at level $R = R_0$ corresponding to the interface of the bore 2 of the rotor). The vectors A-SCAN$_I$ may all be preliminarily acquired and processed later, or they may be processed as they are acquired.

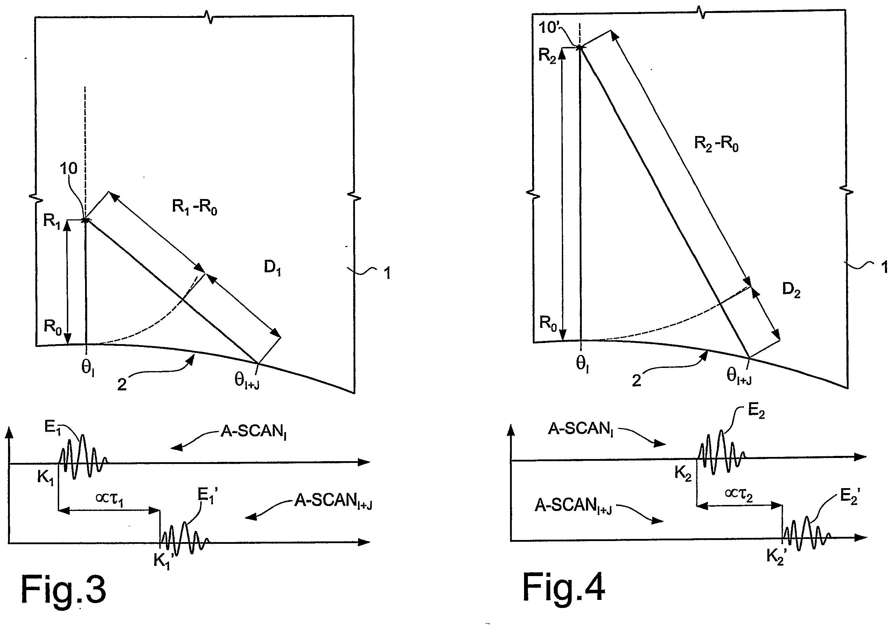

In the presence of discontinuities 10, return echoes are contained in the vectors A-SCAN$_I$ acquired from detection positions, from which the discontinuities 10 are visible (substantially, the vectors A-SCAN$_I$ comprise waveforms indicative of discontinuities in the rotor body 1). The starting index K of the echo provides information concerning the distance from the discontinuity to the probe 3, because the ultrasonic sounds are propagated at a constant and known speed. By way of example, figure 3 shows a discontinuity 10 positioned at a depth $R_1$ from the axis A of the rotor 1 (which is not shown here) as well as a vector A-SCAN$_I$ and a vector A-SCAN$_{I+J}$ acquired by the probe 3 in a position $\theta_I$, aligned with discontinuity 10, and in an offset position $\theta_{I+J}$, respectively. The vector A-SCAN$_I$ contains an echo E$_1$, which starts at a time identified by an index K$_1$. In the vector A-SCAN$_{I+J}$, instead, an echo E$_1$' starts at a subsequent time, identified by an index K$_1$'. The delay $\tau_1$ between the index K$_1$ and the index K$_1$' is due to the difference in the path (2D$_1$) of the return signals S$_R$ captured by the probe 3 in the detection positions $\theta_{1+J}$. In figure 4, a discontinuity 10' is located at a depth R$_2$ greater than the depth R$_1$. In this case, the delay $\tau_2$ is different from the delay $\tau_1$, because the difference in the path (2D$_2$) is also different.

As shown in figure 5, a synthetic array SA$_I$ centred on a generic detection position $\theta_I$ is defined by 2M-1 vectors A-SCAN$_{I-(M-1)}$, ..., A-SCAN$_I$, ..., A-SCAN$_{I+(M-1)}$, acquired by the probe 3 located in respective detection positions $\theta_{I-(M-1)}$, ..., $\theta_I$, ..., $\theta_{I-I+(M-1)}$. For the sake of simplicity, the central detection position will be indicated as detection position $\theta_I$ and the other side detection positions will be indicated as detection positions $\theta_{I+J}$. Furthermore, the central vector of the array SA$_I$, i.e. the vector corresponding to the detection position $\theta_I$, will be indicated by the notation A-SCAN$_I$; the other vectors A-SCAN or side vectors A-SCAN of the synthetic array SA$_I$ will instead be indicated by the notation A-SCAN$_{I+J}$, J being an integer comprised between -(M-1) and M-1 and J≠0.

Each detection position $\theta_{I+J}$ defines an element of the synthetic array SA$_I$. The number 2M-1 of elements of the synthetic array SA$_I$ is determined so that in any detection position $\theta_{I+J}$ of the synthetic array SA$_I$, the volume V visible by the probe 3 (schematically shown in figure 5) at least partially covers an examined portion of the rotor 1, which radially faces the central element of the synthetic array SA$_I$ (substantially, the probe 3 in the central detection position $\theta_I$).

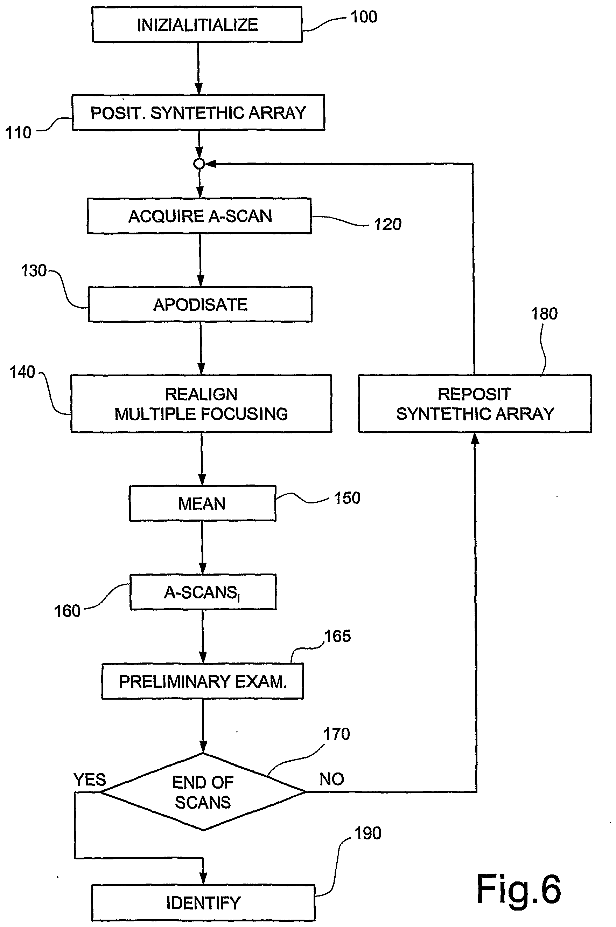

With reference to figure 6, the SAFT technique described here provides that, after an initialization step (block 100), the synthetic array SA$_I$ is positioned in the generic detection position $\theta_I$ (block 110).

Therefore (block 120), the vectors A-SCAN$_{I+J}$ corresponding to the elements of the synthetic array SA$_I$ are acquired. As previously pointed out, all of the vectors A-SCAN$_{I+J}$ may be acquired preliminarily to the processing and stored.

An apodisating phase is then performed (block 130), in which the vectors A-SCAN$_{I+J}$ are normalised in order to consider the radiation diagram RD of the probe 3 (shown in a simplified manner in figures 7a, 7b), which is not isotropic, is characteristic of the type of probe 3 used and is known. Substantially, the elements of the vectors A-SCAN$_{I+J}$ are weighted so as to compensate the dependence of the radiation diagram RD upon the angle $\alpha$ with respect to the pointing axis of the probe 3. The central vector A-SCAN$_I$ does not require apodisation, because it corresponds to the maximum of the radiation diagram RD. In order to eliminate the effects of amplitude non-linearity in the measurement of the probe 3, the vectors A-SCAN$_{I-(M-1)}$, ..., A-SCAN$_{I-1}$, A-SCAN$_{I+1}$, ..., A-SCAN$_{I+(M-1)}$ are further normalised with respect to the so-called DAC curve ("Distance-Amplitude Curve") of the probe 3 itself. The DAC curve is as well a known feature of the probe 3.

The side vectors A-SCAN$_{I-(M-1)}$, ..., A-SCAN$_{I-1}$, A-SCAN$_{I+1}$, ..., A-SCAN$_{I+(M-1)}$ (vectors A-SCAN$_{I+J}$ with J≠0) are then processed and phase-translated so as to obtain a multiple focusing (block 140), according to the modes described hereafter.

Here and in the following, "to apply a phase translation to an element of a vector" has at least the following meanings:

- to perform a mere time translation of the element, assigning the corresponding sample a new position (index) in the vector;
- to substitute the sample corresponding to the element at issue with a new sample of the signal represented by the vector, the new sample having a given phase difference with respect to the original sample (consider, for example, a vector V, the elements V(K) of which are obtained from the sampling of a signal X(T) at times KT, being K = 0, 1, 2, ...; the substitution of the sample X(KT), corresponding to the element V(K), with a new sample X(KT + T*) is defined as a phase translation T* applied to the element V(K)).

In the second case the new sample and the original sample may obviously have a different value.

In this step, substantially, realigned vectors A-SCANR$_{I-(M-1)}$, ..., A-SCANR$_I$, ..., A-SCANR$_{I+(M-1)}$ (from here on concisely indicated as vectors A-SCANR$_{I+J}$) are generated, the elements A-SCANR$_{I+J}$(K) of which are indicative (index K being the same) of the continuity condition of a same portion of the rotor 1 (substantially, of a portion of rotor 1 aligned to the probe 3 in the central detection position $\theta_I$ and corresponding to the element A-SCAN$_I$(K) of the central vector A-SCAN$_I$). A central vector A-SCANR$_I$ coincides with the central vector A-SCAN$_I$.

Then, the mean of the realigned vectors A-SCANR$_{I+J}$ is calculated (block 150) and a focused vector A-SCANS$_I$ is determined (block 160), the elements A-SCANS$_I$(K) of which are the mean of the corresponding elements A-SCANR$_{I+J}$(K) of the realigned vectors A-SCANR$_{I+J}$. The focused vector A-SCANS$_I$ is associated to the central detection position $\theta_I$ of the synthetic array SA$_I$.

A preliminary inspection procedure (hereinafter described in greater detail) is then performed to identify in real time the focused vectors A-SCANS$_I$ containing echoes, which may be associated to possible discontinuities 10, 10' in the rotor 1, and store them (block 165). In this step, the focused vectors A-SCANS$_I$ which do not contain echoes are eliminated instead, thus avoiding the storing of considerable amounts of unnecessary data.

If the scan of the rotor 1 has not already been completed (i.e. if the synthetic array SA$_I$ has not yet reached the end of the scanning path, output NO from block 170), the synthetic array SA$_I$ is repositioned and centred on a detection position $\theta_{I+1}$ following the detection position $\theta_I$ which has just be analysed (block 180). The calculation is resumed with the acquisition of the vectors A-SCAN$_{I-M+2}$, ..., A-SCANR$_{I+1}$, ..., A-SCANR$_{I+M}$ corresponding to the new position of the synthetic array SA$_{I+1}$ (block 120).

If, instead, the scan of the rotor 1 is completed (output YES from block 170), an identification procedure is performed to identify, from the stored focused vectors A-SCANS$_I$, echoes E1 and E1' associated to discontinuities 10, 10' in the rotor 1 (block 190; also see figures 3 and 4). Such a procedure will be described in detail hereinafter.

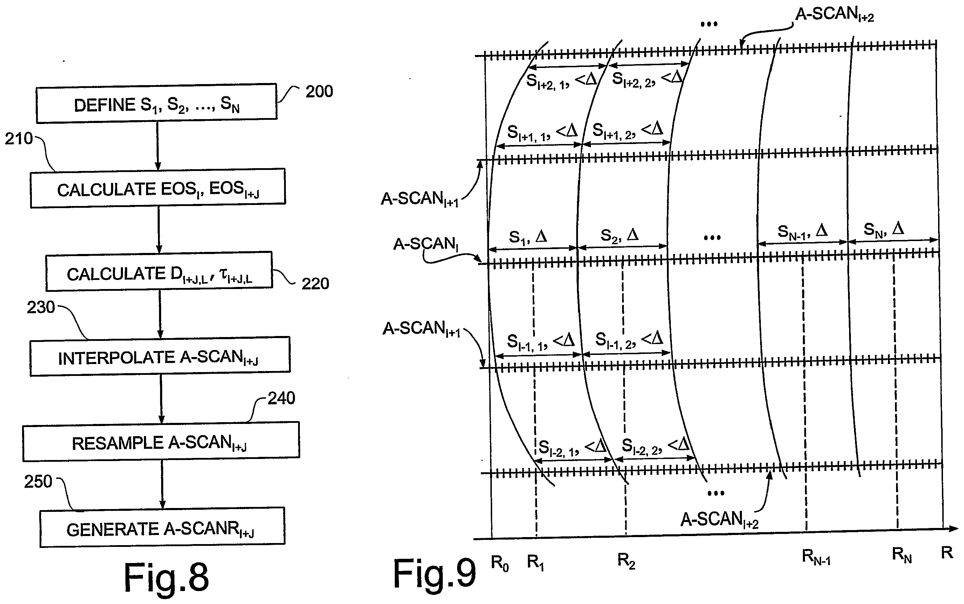

The realignment and focusing operations (block 140 of figure 6) are performed as follows. With reference to figures 8 and 9, the central vector A-SCAN$_I$ is subdivided (block 200 in figure 8) in a plurality of sections S$_1$, S$_2$, ..., S$_N$ (figure 9), according to how many are the different focusing depths selected.

For each vector A-SCAN$_{I+J}$ of the synthetic array SA$_I$, a maximum scanning depth EOS$_{I+J}$ is then defined (block 210, figure 8). In the case of the central vector A-SCAN$_I$ of the synthetic array SA$_I$, the maximum scanning depth EOS$_I$ is used to define a range $\Delta$INT = EOS$_I$/N within which the focusing depth is assumed to be constant. A generic section S$_L$ (with 1<L<N) therefore comprises a number $\Delta$ of elements of the central vector A-SCAN$_I$ defined by values of the index K in the range from (L-1)$\Delta$ to L$\Delta$-1. For each section S$_L$, a focusing depth of section R$_L$ is then defined, obtained from

$$R_L = (L-0,5)\Delta \ V/F_S \qquad (1)$$

where V is the propagation speed of the ultrasonic signals in the material forming the rotor 1 and is known. Substantially, it is considered that the elements A-SCAN$_I$(K) of the section S$_L$ have the same focusing depth of section R$_L$.

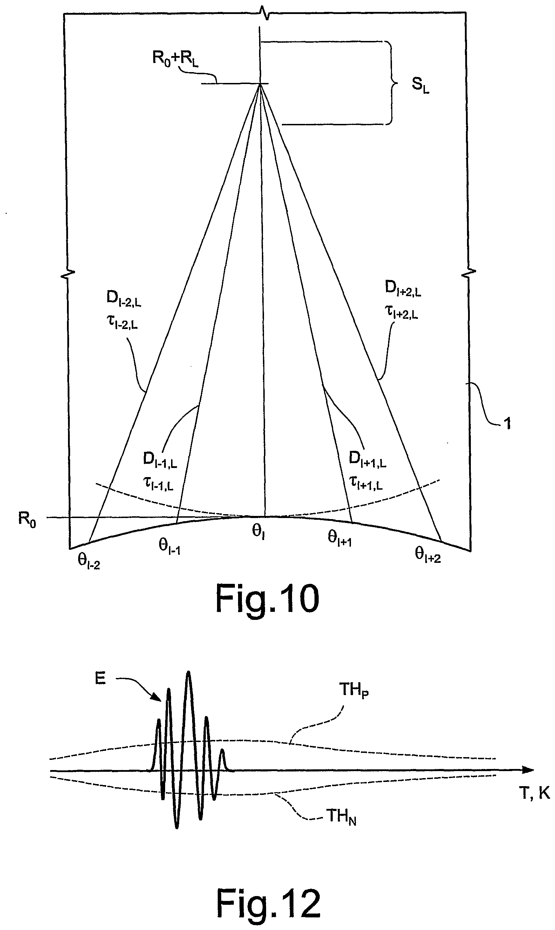

Subsequently (block 220), the distances D$_{I+J,L}$ are calculated between the points of the internal surface of the rotor 1 corresponding to the detection positions $\theta_{I+J}$ (except for the central detection position $\theta_I$) and the points corresponding to the focusing depth R$_L$ associated to each section S$_L$ (see figure 10).

The distances D$_{I+J,L}$ depend, besides, upon the type of probe employed. In the embodiment described here, a so-called planar probe is used and the distances D$_{I+J,L}$ are obtained from:

$$D_{I+J,L} = \sqrt{(R_0+R_L)^2 + R_0^2 - 2R_0(R_0+R_L)\cos(\theta_{I+J}-\theta_I)} \qquad (2a)$$

In the case of a CW ("clockwise") angle probe, there applies:

$$D_{I+J,L} = \sqrt{R_L^2 + 2R_0^2(1-A) - 2R_L R_0\sqrt{2(1-A)}B} \qquad (2b)$$

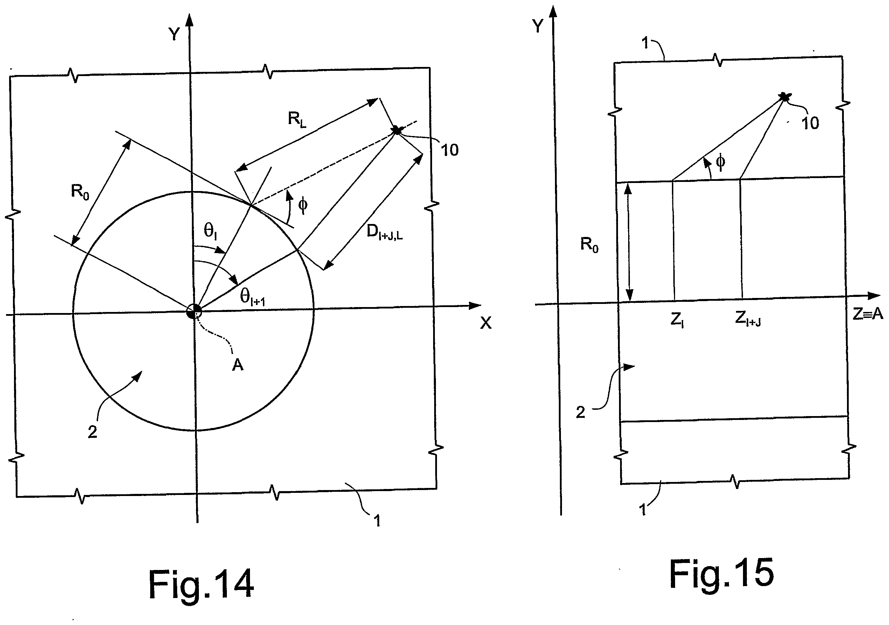

where A = cos($\theta_{I+J}$-$\theta_I$) and B = cos[($\theta_{I+J}$-$\theta_I$)/2+$\phi$] and $\phi$<$\pi$/2 represents the inspection angle characteristic of the specific probe (figure 14).

In the case of a CCW ("counterclockwise") angle probe, the same relation (2b) still applies, with $\phi$>$\pi$/2 (figure 14).

For a RW ("rearward" with respect to the axis A of the rotor 1) angle probe, there applies:

$$D_{I+J,L} = \sqrt{(F-G)^2 + (H-M)^2 + (z_I + N - z_{I+J})^2} \qquad (2c)$$

where F = (R$_0$ + R$_L$ sin $\phi$) sin $\theta_I$, G = R$_0$ sin $\theta_{I+J}$, H = (R$_0$ + R$_L$ sin $\phi$) cos $\theta_I$, M = R$_0$ cos $\theta_{I+J}$, N = R$_L$ cos $\phi$, with $\phi$>$\pi$/2 (in this case, the axial coordinate Z must also be taken in account, along axis A, figure 15).

For a FW ("forward" with respect to the axis A of the rotor 1) angle probe, the same equation (2c) is used, with $\phi$<$\pi$/2 (figure 15) .

The distances D$_{I+J,L}$ are therefore used to calculate delays $\tau_{I+J,L}$ (J = -(M-1),..., M-1; L = 1, 2, ..., N) to be applied to the elements of the vectors A-SCAN$_{I+J}$ in order to obtain a phase correction that allows to separately and simultaneously focus all of the sections S$_1$, S$_2$, ..., S$_N$. Specifically, the delays $\tau_{I+J,L}$ are obtained from

$$\tau_{I+J,L} = 2(D_{I+J,L} - R_L)/V \qquad (3)$$

and keep into account the difference in the path the ultrasonic pulses need to cover to reach a point in the rotor 1, which corresponds to an element of the vector A-SCAN$_I$ of a section S$_L$ from the different detection positions $\theta_{I+J}$. For each section S$_L$, the delays $\tau_{I+J,L}$ allow to identify corresponding sections S$_{I+J,L}$ of the side vectors A-SCAN$_{I+J}$ (J≠0) containing information corresponding to the same portion of the rotor 1 explored by the elements A-SCAN$_I$(K) of the section S$_L$ of the central vector A-SCAN$_I$ (figure 9).

The calculated delays $\tau_{I+J,L}$ are then applied to the respective elements A-SCAN$_{I+J}$(K) to perform the multiple focusing, so that the same value of the index K is associated to the elements containing corresponding information.

Substantially, an element A-SCAN$_{I+J}$(K+$\tau_{I+J,L}$) of each side vector A-SCAN$_{I+J}$ would correspond to an element A-SCAN$_I$(K) of a section S$_L$ of the central vector A-SCAN$_I$ (whereby (L-1)Δ < K < LΔ-1). As an effect of the non-linearity reciprocally connecting the distances D$_{I+J,L}$, although, the times K+$\tau_{I+J,L}$ do not correspond to actual sampling times and, furthermore, the sections of the side vectors A-SCAN$_{I+J}$ normally contain a number of samples other than the number of the corresponding sections S$_1$, S$_2$, ..., S$_N$ of the central vector A-SCAN$_I$.

In order to perform the multiple refocusing, the vectors A-SCAN$_{I+J}$ are interpolated (figure 8, block 230) and subsequently resampled (block 240), considering the delays $\tau_{I+J,L}$. The realigned vectors A-SCANR$_{I+J}$ are thus generated (block 250). Specifically, the interpolation and resampling are performed so as to have Δ elements for each section S$_{I+J,L}$ in each of the realigned side vectors A-SCANR$_{I+J}$ (J≠0) and so that the information associated to the elements A-SCANR$_{I+J}$(K) of the realigned side vectors A-SCANR$_{I+J}$ corresponds to the information associated to the element A-SCANR$_I$(K) of the realigned central vector A-SCANR$_I$ having the same index K (the realigned central vector A-SCANR$_I$ coincides with the central vector A-SCAN$_I$). The interpolation and the resampling in practice perform the phase translation:

$$K' = K + \tau_{I+J,L} \qquad\qquad (4)$$

separately and independently for each section S$_L$.

The resampling is obviously always possible, substantially without the loss of information, provieded that the sampling frequency F$_S$ is selected in accordance with the well-known Nyquist-Shannon sampling theorem.

The realigned vectors A-SCANR$_{I+J}$ determined in this manner, are then used for the calculation of the mean and the generation of the focused vectors A-SCANS$_I$ (blocks 150 e 160 of figure 6).

Substantially, according to the process described, the sections S$_L$ of each vector A-SCAN$_{I+J}$ are realigned and focused separately, so that the contributions of useful signal contained therein are consistently summed during the mean operation. The background components, which are inherently not consistent, are, instead, substantially eliminated or, in any case, reduced by the mean operation, rendering the useful signal more easily distinguishable. A single mean operation is sufficient to obtain focused vectors A-SCANS$_I$ regardless of the depth. The process is therefore light enough from a computational point of view to be extensively applied along the entire scanning path. In this manner, it is possible to also detect minor structural defects, which would normally be covered by the background and would not be detected.

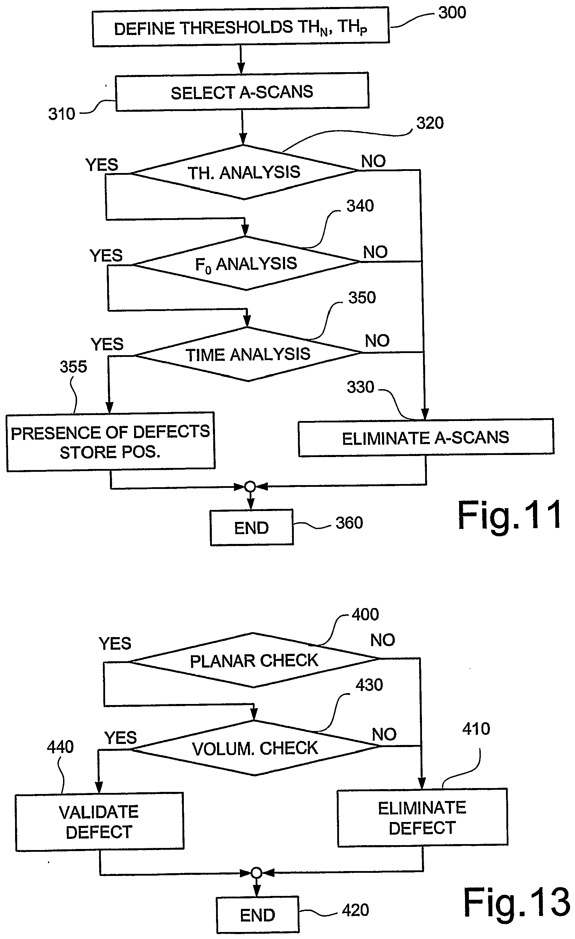

Figure 11 shows the preliminary inspecting step of the defects 165 in figure 6 in greater detail. At first (block 300), a negative detection threshold TH$_N$ and a positive detection threshold TH$_P$ are defined, which need to be exceeded for the identification of waveforms E associated to discontinuities in the body of the rotor 1 (also see figure 12). For this purpose, a series of reference vectors A-SCAN is detected in a test portion of the rotor 1 having no defects. The acquired signals in the absence of defects will be zero-mean radio frequency signals , usually having a non-constant amplitude as the depth varies along the pointing axis of the probe. The mean and both the positive and the negative envelope of the reference vectors A-SCAN are calculated. The negative detection threshold TH$_N$ and the positive detection threshold TH$_P$ are defined by the respective negative envelope and positive envelope fractions, to which the possible offset is summed.

Therefore, a focused vector A-SCANS$_I$ that must be analysed (block 310) is selected, and a threshold check is performed (block 320). Specifically, the selected focused vector A-SCANS$_I$ is considered significant if the following conditions are fulfilled:

- the focused vector A-SCANS$_I$ contains a first element A-SCANS$_I$(K$_1$) and a second element A-SCANS$_I$(K$_2$) such that A-SCANS$_I$(K$_1$)>TH$_P$ and A-SCANS$_I$(K$_2$)<TH$_N$; and
- K$_1$<K$_{EF}$ and K$_2$<K$_{EF}$ (K$_{EF}$ is the index at which the background echo is detected and it may be determined either empirically or by previously knowing the thickness of the examined section).

If these conditions are not fulfilled, the focused vector A-SCANS$_I$ is not indicative of possible defects and is ignored (output NO from block 320, block 330) and the procedure ends (block 360).

The focused vectors A-SCANS$_I$ which have passed the threshold check are subjected to a frequency check (output YES from block 320, block 340). Substantially, the return signals S$_R$ related to discontinuities in the rotor 1 have a cisoid trend with oscillation frequency substantially equal to the fundamental frequency F$_0$ of the inspection signals S$_I$

emitted from the probe 3. In this phase, the frequency with which the return signal $S_R$ contained in the focused vector A-SCANS$_I$ exceeds both the positive detection threshold TH$_P$ and the negative detection threshold TH$_N$, is checked (figure 12). If such a frequency is compatible with the fundamental frequency $F_0$ (output YES from block 340), the focused vector A-SCANS$_I$ is subjected to a time analysis (block 350), otherwise it is ignored (output NO from block 340, block 330) and the procedure ends (block 360).

The time analysis comprises the following operations:

- extracting local maximums and minimums contained in the focused vector A-SCANS$_I$;
- checking the compatibility of the frequency of the local maximums and minimums with the fundamental frequency $F_0$.

Alternatively, the time analysis comprises calculating a correlation index between the maximum and, respectively, minimum elements A-SCANS$_I$(K) of the positive detection threshold TH$_P$ and the negative detection threshold TH$_N$ and samples of the response to the impulse of the probe 3. The criterion to fulfil is that the correlation index be higher than a predetermined threshold.

If the time analysis is not passed, the focused vector A-SCANS$_I$ is ignored (output NO from block 350, block 330). If, on the contrary, the time analysis is also successful, the presence of a likely discontinuity or defect and its position are stored (output YES from block 350, block 355). In both cases, the procedure ends (block 360).

Figure 13 shows in greater detail the identification procedure (which is performed in a post-processing step, even off-line) of discontinuities 10, 10' in the rotor 1 (block 190 of figure 6). Firstly, a planar consistency check is performed comparing focused vectors A-SCANS$_I$ corresponding to adjacent detection positions $\theta_I$ and verifying the consistency of the information contained (block 400). Specifically, the planar consistency check corresponding to a detected defect is passed if:

- different adjacent focused vectors A-SCANS$_I$, corresponding to detection positions $\theta_I$ (reciprocally contiguous in an observation angle $\alpha$'), contain indications of a defect;
- the indications of defect in adjacent focused vectors A-SCANS$_I$ are compatible as depth is concerned, i.e. the difference between maximum depth and minimum depth is smaller than a predetermined value; and
- the observation angle $\alpha$' of the defects is compatible with the amplitude of the radiation diagram of the probe 3.

If the planar consistency check fails (output NO from block 400), the focused vectors A-SCANS$_I$ containing incongruent defect indications are ignored (block 410) and the procedure ends (block 420), otherwise, a volumetric consistency check is performed (output YES from block 400, block 430). Specifically, there are checked:

- the consistency of the indications of defects in adjacent focused vectors A-SCANS$_I$ in axial direction; and
- the correlation for small defects (smaller at the aperture of the probe) between "scattered" intensity and amplitude of the intersection between defect and radiation diagram.

If the volumetric consistency check fails, the defect indications and the corresponding focused vectors A-SCANS$_I$ are ignored (output NO from block 430, block 410), otherwise the defect indications are validated (output YES from block 410, block 440). In both cases, the procedure ends (block 420) .

It is finally apparent that modifications and variants may be made to the method described, without departing from the scope of the present invention, as defined in the accompanying claims.

Specifically, the method according to the invention may be advantageously exploited for the inspection of any type of metal component, not only for hollow axis rotors. For instance, it is possible to analyse gas turbine disks, even though the geometry is clearly different. As previously indicated, it is also possible to use a plurality of probes of various types both simultaneously and alternatively.

**Claims**

1. A method for the ultrasonic inspection of metal components by a synthetic aperture focusing technique, comprising the steps of:

   alternatively emitting ultrasonic inspection signals ($S_I$) towards the inside of a metal component (1) and receiving return signals ($S_R$) in each of a plurality of detection positions ($\theta_I$, $\theta_{I+J}$) defining a scanning path of the metal component (1);
   sampling the return signals ($S_R$), to form first vectors (A-SCAN$_I$, A-SCAN$_{I+J}$) comprising respective series of temporally sorted elements (A-SCAN$_{I+J}$(K));

defining a synthetic array ($SA_I$) including a plurality of first vectors (A-SCAN$_I$, A-SCAN$_{I+J}$) corresponding to respective adjacent detection positions ($\theta_I$, $\theta_{I+J}$); and

focusing the first vectors (A-SCAN$_I$, A-SCAN$_{I+J}$) of the synthetic array ($SA_I$), wherein the step of focusing comprises applying phase translations (K') to the elements (A-SCAN$_{I+J}$(K)) of the first vectors (A-SCAN$_I$, A-SCAN$_{I+J}$) of the synthetic array ($SA_I$);

wherein the phase translation (K') respectively applied to each element (A-SCAN$_{I+J}$(K)) is correlated to a position (K) of said element (A-SCAN$_{I+J}$(K)) in the series of elements forming the respective first vector (A-SCAN$_I$, A-SCAN$_{I+J}$) of the synthetic array ($SA_I$);

**characterised in that** applying phase translations comprises:

defining a plurality of focusing depths ($R_L$) for a first central vector (A-SCAN$_I$) of the synthetic array ($SA_I$), corresponding to a central detection position ($\theta_I$);

defining a plurality of sections ($S_1$, $S_2$, ..., $S_L$) of the first central vector (A-SCAN$_I$), associated to respective focusing depths ($R_L$);

calculating a detection delay ($\tau_{I+J,L}$) for each side detection position ($\theta_{I+J}$) other than the central detection position ($\theta_I$) and for each focusing depth ($R_L$);

associating a respective delay ($\tau_{I+J,L}$) to each element (A-SCAN$_{I+J}$(K)) of first side vectors (A-SCAN$_{I+J}$) in order to generate second vectors (A-SCANR$_I$, A-SCANR$_{I+J}$).

2.  A method according to claim 1, wherein associating a respective delay comprises:

interpolating the first side vectors (A-SCAN$_{I+J}$) on the basis of the delays ($\tau_{I+J,L}$) associated to the respective elements (A-SCAN$_{I+J}$(K)) ;

resampling the first side vectors (A-SCAN$_{I+J}$) so that sections ($S_1$, $S_2$, ..., $S_L$) of a second central vector (A-SCANR$_I$) and corresponding sections of the second side vectors (A-SCANR$_{I+J}$) contain an identical number of elements ($\Delta$) and so that the information corresponding to an identical portion of the metal component (1) is associated to elements of the second central vector (A-SCANR$_I$(K)) and to corresponding elements (A-SCANR$_{I+J}$(K)) of the second side vectors (A-SCAN$_{I+J}$), which are designated by a same value of index (K).

3.  A method according to claim 2, comprising the steps of:

determining a third vector (A-SCANS$_I$), on the basis of a mean of the second vectors (A-SCANR$_I$, A-SCANR$_{I+J}$);

associating the third vector (A-SCANSi) to the central detection position ($\theta_I$) of the synthetic array ($SA_I$).

4.  A method according to claim 3, comprising the step of performing a preliminary inspection procedure (165), to select third vectors (A-SCANSi) containing waveforms ($E_1$, $E_1$') indicative of possible discontinuities (10, 10') in the metal component (1).

5.  A method according to claim 4, wherein the step of selecting third vectors comprises:

storing third vectors (A-SCANSi) containing waveforms ($E_1$, $E_1$') indicative of possible discontinuities (10, 10') in the metal component (1); and

eliminating third vectors (A-SCANSi) which do not contain waveforms ($E_1$, $E_1$') indicative of possible discontinuities (10, 10') in the metal component (1).

6.  A method according to claim 4 or 5, wherein the step of performing an identification procedure (190) comprises:

determining (300) a first positive detection threshold ($TH_P$) and a second negative detection threshold ($TH_N$);

selecting (310) a third vector (A-SCANS$_I$); and

checking (320) if the selected third vector (A-SCANS$_I$) contains a first element (A-SCANS$_I$($K_1$)) higher than the first detection threshold ($TH_P$) and a second element (A-SCANS$_I$($K_2$)) lower than the second detection threshold ($TH_N$).

7.  A method according to claim 6, wherein the step of performing a detection procedure (190) also comprises checking if the return signal ($S_R$) associated to the selected third vector (A-SCANS$_I$) exceeds both the first detection threshold ($TH_P$) and the second detection threshold ($TH_N$) with a frequency compatible with the fundamental frequency ($F_0$) of the inspection signals ($S_I$).

8. A method according to claim 7, wherein the step of performing an identification procedure (190) also comprises:

extracting local maximums and minimums contained in the selected third vector (A-SCANS$_I$); and
checking the compatibility of a frequency of local maximums and minimums with the fundamental frequency ($F_0$) of the inspection signals (S$_I$).

9. A method according to any of claims 7 or 8, wherein the step of performing an identification procedure (190) also comprises:

performing a planar consistency check (370) of third vectors (A-SCANS$_I$) corresponding to adjacent detection positions ($\theta_I$, $\theta_{I+J}$); and
performing a volumetric consistency check (375).

10. A method according to any of the preceding claims, wherein the inspection signals (S$_I$) and the return signals (S$_R$) are respectively generated and received by an ultrasonic probe (3) and wherein the first vectors (A-SCAN$_{I+J}$) are normalised on the basis of a radiation diagram (RD) of the ultrasonic probe (3).


**Patentansprüche**

1. Verfahren zur Ultraschall-Untersuchung von Metallbauteilen durch eine Fokussiertechnik mit synthetischer Apertur, enthaltend die Schritte:

abwechselnd Emittieren von Ultraschall-Untersuchungssignalen (S$_I$) in Richtung des Inneren eines Metallbauteils (1) und Empfangen von Rücksignalen (S$_R$) in jeder einer Vielzahl von Erfassungspositionen ($\theta_I$, $\theta_{I+J}$), die einen Abtastpfad des Metallbauteils (1) definieren;
Abtasten der Rücksignale (S$_R$) zum Bilden von ersten Vektoren (A-SCAN$_I$, A-SCAN$_{I+J}$), die jeweilige Reihen von zeitlich sortierten Elementen (A-SCAN$_{I+J}$(K)) enthalten;
Definieren eines synthetischen Array (SA$_I$), das eine Vielzahl von ersten Vektoren (A-SCAN$_I$, A-SCAN$_{I+J}$) umfasst, die jeweiligen benachbarten Erfassungspositionen ($\theta_I$, $\theta_{I+J}$) entsprechen; und
Fokussieren der ersten Vektoren (A-SCAN$_I$, A-SCAN$_{I+J}$) des synthetischen Array (SA$_I$), wobei der Schritt des Fokussierens das Anwenden von Phasenverschiebungen (K') an den Elementen (A-SCAN$_{I+J}$(K)) der ersten Vektoren (A-SCAN$_I$, A-SCAN$_{I+J}$) des synthetischen Array (SA$_I$) umfasst;
wobei die jeweils an jedem Element (A-SCAN$_{I+J}$(K)) durchgeführte Phasenverschiebung (K') mit einer Position (K) des Elements (A-SCAN$_{I+J}$(K)) in der Reihe von Elementen korreliert ist, die den jeweiligen ersten Vektor (A-SCAN$_I$, A-SCAN$_{I+J}$) des synthetischen Array (SA$_I$) bilden;
**dadurch gekennzeichnet, dass** das Anwenden von Phasenverschiebungen enthält:

Definieren einer Vielzahl von Fokussiertiefen (R$_L$) für einen ersten zentralen Vektor (A-SCAN$_I$) des synthetischen Array (SA$_I$), der einer zentralen Erfassungsposition ($\theta_I$) entspricht;
Definieren eine Vielzahl von Abschnitten (S$_1$, S$_2$, ..., S$_L$) des ersten zentralen Vektors (A-SCAN$_I$), die jeweiligen Fokussiertiefen (R$_L$) zugehörig sind;
Berechnen einer Erfassungsverzögerung ($\tau_{I+J,L}$) für jede seitliche Erfassungspositionen ($\theta_{I+J}$), die von der zentralen Erfassungsposition ($\theta_I$) verschieden ist, und für jede Fokussiertiefe (R$_L$);
Verbinden einer jeweiligen Verzögerung ($\tau_{I+J,L}$) mit jedem Element (A-SCAN$_{I+J}$(K)) der ersten seitlichen Vektoren (A-SCAN$_{I+J}$), um zweite Vektoren (A-SCANR$_I$, A-SCANR$_{I+J}$) zu erzeugen.

2. Verfahren nach Anspruch 1, wobei das Verbinden einer jeweiligen Verzögerung enthält:

Interpolieren der ersten seitlichen Vektoren (A-SCAN$_{I+J}$) auf der Grundlage der mit den jeweiligen Elementen (A-SCAN$_{I+J}$(K)) verbundenen Verzögerungen ($\tau_{I+J,L}$);
erneutes Abtasten der ersten seitlichen Vektoren (A-SCAN$_{I+J}$), sodass Abschnitte (S$_1$, S$_2$, ..., S$_L$) eines zweiten zentralen Vektors (A-SCANR$_I$) und entsprechende Abschnitte der zweiten seitlichen Vektoren (A-SCANR$_{I+J}$) eine identische Anzahl von Elementen ($\Delta$) enthalten, und so, dass die einem identischen Teil des Metallbauteils (1) entsprechenden Informationen mit Elementen des zweiten zentralen Vektors (A-SCANR$_I$(K)) und mit entsprechenden Elementen (A-SCANR$_{I+J}$(K)) der zweiten seitlichen Vektoren verbunden werden, die durch denselben Indexwert (K) bezeichnet sind.

3. Verfahren nach Anspruch 2, enthaltend die Schritte:

   Ermitteln eines dritten Vektors (A-SCANS$_I$) auf der Grundlage eines Mittelwerts der zweiten Vektoren (A-SCANR$_I$, A-SCANR$_{I+J}$);
   Verbinden des dritten Vektors (A-SCANS$_I$) mit der zentralen Erfassungsposition ($\theta_I$) des synthetischen Array (SA$_I$).

4. Verfahren nach Anspruch 3, enthaltend den Schritt des Durchführen eines vorläufigen Untersuchungsvorgangs (165) zum Auswählen von dritten Vektoren (A-SCANS$_I$), die Wellenformen (E$_1$, E$_1$') enthalten, die mögliche Diskontinuitäten (10, 10') in dem Metallbauteil (1) anzeigen.

5. Verfahren nach Anspruch 4, wobei der Schritt des Auswählens von dritten Vektoren enthält:

   Speichern von dritten Vektoren (A-SCANS$_I$), die Wellenformen (E$_1$, E$_1$') enthalten, die mögliche Diskontinuitäten (10, 10') in dem Metallbauteil (1) anzeigen; und
   Beseitigen von dritten Vektoren (A-SCANS$_I$), die keine Wellenformen (E$_1$, E$_1$') enthalten, die mögliche Diskontinuitäten (10, 10') in dem Metallbauteil (1) anzeigen.

6. Verfahren nach Anspruch 4 oder 5, wobei der Schritt der Durchführung eines Identifizierungsvorgangs (190) enthält:

   Ermitteln (300) einer ersten positiven Erfassungsschwelle (THp) und einer zweiten negativen Erfassungsschwelle (TH$_N$);
   Auswählen eines dritten Vektors (A-SCANS$_I$); und
   Überprüfen (320), ob der ausgewählte dritte Vektor (A-SCANS$_I$) ein erstes Element (A-SCANS$_I$(K$_1$)) enthält, das höher ist als die erste Erfassungsschwelle (THp), und ein zweites Element (A-SCANS$_I$(K$_2$)), das niedriger ist als die zweite Erfassungsschwelle (TH$_N$).

7. Verfahren nach Anspruch 6, wobei der Schritt der Durchführung des Erfassungsvorgangs (190) ferner die Überprüfung enthält, ob das mit dem ausgewählten dritten Vektor (A-SCANS$_I$) verbundene Rücksignal (S$_2$) sowohl die erste Erfassungsschwelle (THp) als auch die zweite Erfassungsschwelle (TH$_N$) mit einer Frequenz übersteigt, die mit der Basisfrequenz (F$_0$) der Untersuchungssignale (S$_I$) kompatibel ist.

8. Verfahren nach Anspruch 7, wobei der Schritt der Durchführung eines Identifizierungsvorgangs (190) ferner enthält:

   Extrahieren von lokalen Maxima und Minima, die in dem ausgewählten dritten Vektor (A-SCANS$_I$) enthalten sind; und
   Überprüfen der Kompatibilität einer Frequenz von lokalen Maxima und Minima mit der Basisfrequenz (F$_0$) der Untersuchungssignale (S$_I$).

9. Verfahren nach einem der Ansprüche 7 oder 8, wobei der Schritt der Durchführung eines Identifizierungsvorgangs (190) ferner enthält:

   Durchführen einer Überprüfung der planaren Konsistenz (370) der benachbarten Erfassungspositionen ($\theta_I$, $\theta_{I+J}$) entsprechenden dritten Vektoren (A-SCANS$_I$); und
   Durchführen einer Überprüfung der volumetrischen Konsistenz (375) .

10. Verfahren nach einem der vorhergehenden Ansprüche, wobei die Untersuchungssignale (S$_I$) und die Rücksignale (S$_R$) jeweils von einer Ultraschallsonde (3) erzeugt und empfangen werden und wobei die ersten Vektoren (A-SCAN$_{I+J}$) auf der Grundlage eines Strahlungsdiagramms (RD) der Ultraschallsonde (3) normalisiert werden.

**Revendications**

1. Procédé destiné à une inspection par ultrasons de composants métalliques à l'aide d'une technique de focalisation à synthèse d'ouverture, comprenant les étapes consistant à :

   tour à tour, émettre des signaux d'inspection par ultrasons (S$_I$) vers l'intérieur d'un composant métallique (1), et recevoir des signaux de retour (S$_R$) dans chacune d'une pluralité de positions de détection ($\theta_I$, $\theta_{I+J}$) qui

définissent un chemin de balayage du composant métallique (1) ;

échantillonner les signaux de retour ($S_R$), de façon à former des premiers vecteurs (A - SCAN$_I$, A - SCAN$_{I+J}$) qui comprennent des séries respectives d'éléments triés de manière temporelle (A - SCAN$_{I+J}$(K)) ;

définir un réseau de synthèse (SA$_I$) qui comprend une pluralité de premiers vecteurs (A - SCAN$_I$, A - SCAN$_{I + J}$) qui correspondent à des positions de détection adjacentes respectives ($\theta_I$, $\theta_{I+J}$) ; et

focaliser les premiers vecteurs (A - SCAN$_I$, A - SCAN$_{I + J}$) du réseau de synthèse (SA$_I$), dans lequel l'étape de focalisation comprend une étape consistant à appliquer des translations de phase (K') aux éléments (A - SCAN$_{I+J}$(K)) des premiers vecteurs (A - SCAN$_I$, A - SCAN$_{I+J}$) du réseau de synthèse (SA$_I$) ;

dans lequel la translation de phase (K') appliquée de manière respective à chaque élément (A - SCAN$_{I+J}$(K)) est corrélée avec une position (K) dudit élément (A - SCAN$_{I + J}$ (K)) de la série d'éléments qui forment le premier vecteur respectif (A - SCAN$_I$, A - SCAN$_{I+J}$) du réseau de synthèse (SA$_I$) ;

**caractérisé en ce que** l'étape consistant à appliquer les translations de phase, comprend les étapes consistant à :

définir une pluralité de profondeurs de focalisation (R$_L$) d'un premier vecteur central (A - SCAN$_I$) du réseau de synthèse (SA$_I$), qui correspond à une position de détection centrale ($\theta_I$) ;

définir une pluralité de sections (S$_1$, S$_2$, ... , S$_L$) du premier vecteur central (A - SCAN$_I$), associées aux profondeurs de focalisation respectives (R$_L$) ;

calculer un retard de détection ($\tau_{I + J, L}$) pour chaque position de détection latérale ($\theta_{I + J}$) autre que la position de détection centrale ($\theta_I$), et pour chaque profondeur de focalisation (R$_L$) ;

associer un retard respectif ($\tau_{I + J, L}$) à chaque élément (A - SCAN$_{I + J}$ (K)) des premiers vecteurs latéraux (A - SCAN$_{I + J}$) de façon à générer des deuxièmes vecteurs (A - SCANR$_I$, A - SCANR$_{I + J}$).

2. Procédé selon la revendication 1, dans lequel l'étape consistant à associer un retard respectif comprend les étapes consistant à :

interpoler les premiers vecteurs latéraux (A - SCAN$_{I + J}$) sur la base des retards ($\tau_{I + J, L}$) associés aux éléments respectifs (A - SCAN$_{I + J}$ (K)) ;

rééchantillonner les premiers vecteurs latéraux (A - SCAN$_{I + J}$) de telle sorte que les sections (S$_1$, S$_2$, ... , S$_L$) d'un deuxième vecteur central (A - SCANR$_I$), et les sections correspondantes de deuxièmes vecteurs latéraux (A - SCANR$_{I + J}$), contiennent un nombre identique d'éléments ($\Delta$), et de telle sorte que les informations qui correspondent à une partie identique du composant métallique (1), soient associées aux éléments du deuxième vecteur central (A - SCANR$_I$ (K)) et aux éléments correspondants (A - SCANR$_{I + J}$ (K)) des deuxièmes vecteurs latéraux (A - SCAN$_{I + J}$), qui sont indiqués par une même valeur de l'index (K).

3. Procédé selon la revendication 2, comprenant les étapes consistant à :

déterminer un troisième vecteur (A - SCANS$_I$), sur la base d'une moyenne des deuxièmes vecteurs (A - SCANR$_I$, A - SCANR$_{I+J}$) ;

associer le troisième vecteur (A - SCANS$_I$) à la position de détection centrale ($\theta_I$) du réseau de synthèse (SA$_I$).

4. Procédé selon la revendication 3, comprenant l'étape consistant à exécuter une procédure d'inspection préliminaire (165), de façon à sélectionner des troisièmes vecteurs (A - SCANS$_I$) qui contiennent des formes d'onde (E$_1$, E$_1$') indicatives de possibles discontinuités (10, 10') dans le composant métallique (1).

5. Procédé selon la réclamation, 4, dans lequel l'étape consistant à sélectionner les troisième vecteurs comprend les étapes consistant à :

stocker les troisièmes vecteurs (A - SCANS$_I$) qui contiennent des formes d'onde (E$_1$, E$_1$') indicatives de possibles discontinuités (10, 10') dans le composant métallique (1) ; et

éliminer les troisièmes vecteurs (A - SCANS$_I$) qui ne contiennent pas de formes d'onde (E$_1$, E$_1$') indicatives de possibles discontinuités (10, 10') dans le composant métallique (1).

6. Procédé selon la revendication 4 ou la revendication 5, dans lequel l'étape consistant à exécuter une procédure d'identification (190) comprend les étapes consistant à :

déterminer (300) un premier seuil de détection positif (THp) et un second seuil de détection négatif (TH$_N$) ;

sélectionner (310) un troisième vecteur (A - SCANS$_I$) ; et

contrôler (320) si le troisième vecteur sélectionné (A - SCANS$_I$) contient un premier élément (A - SCANS$_I$ (K$_1$)) supérieur au premier seuil de détection (THp), et un deuxième élément (A - SCANS$_I$ (K$_2$)) inférieur au deuxième seuil de détection (TH$_N$).

7.  Procédé selon la revendication 6, dans lequel l'étape consistant à exécuter une procédure de détection (190), comprend également une étape consistant à contrôler si le signal de retour (S$_R$) associé au troisième vecteur sélectionné (A - SCANS$_I$) dépasse le premier seuil de détection (TH$_P$) et le deuxième seuil de détection (TH$_N$) avec une fréquence compatible avec la fréquence fondamentale (F$_0$) des signaux d'inspection (S$_I$).

8.  Procédé selon la revendication 7, dans lequel l'étape consistant à exécuter une procédure d'identification (190) comprend également les étapes consistant à :

    extraire les maxima et les minima locaux contenus dans le troisième vecteur sélectionné (A - SCANS$_I$) ; et
    contrôler la compatibilité de la fréquence des maxima et des minima locaux avec la fréquence fondamentale (F$_0$) des signaux d'inspection (S$_I$).

9.  Procédé selon la revendication 7 ou la revendication 8, dans lequel l'étape consistant à exécuter une procédure d'identification (190) comprend également les étapes consistant à :

    exécuter un contrôle de cohérence plane (370) des troisièmes vecteurs (A - SCANS$_I$) qui correspondent à des positions de détection adjacentes ($\theta_I$, $\theta_{I+J}$) ; et
    exécuter un contrôle de cohérence volumétrique (375).

10. Procédé selon l'une quelconque des revendications précédentes, dans lequel les signaux d'inspection (S$_I$) et les signaux de retour (S$_R$) sont générés et reçus de manière respective par une sonde à ultrasons (3), et dans lequel les premiers vecteurs (A - SCAN$_{I + J}$) sont normalisés sur la base d'un diagramme de rayonnement (RD) de la sonde à ultrasons (3).

Fig.1a

Fig.1b

Fig.2

Fig.5

Fig.7a

Fig.7b

Fig.4

Fig.3

Fig.6

Fig.8

Fig.9

Fig.10

Fig.12

DEFINE THRESHOLDS $TH_N$, $TH_P$ — 300

SELECT A-SCANS
310

320
YES ◁ TH. ANALYSIS ▷ NO

340
YES ◁ $F_0$ ANALYSIS ▷ NO

350
YES ◁ TIME ANALYSIS ▷ NO

355
PRESENCE OF DEFECTS STORE POS.

330
ELIMINATE A-SCANS

END — 360

# Fig.11

400
YES ◁ PLANAR CHECK ▷ NO

430
YES ◁ VOLUM. CHECK ▷ NO

440
VALIDATE DEFECT

410
ELIMINATE DEFECT

END — 420

# Fig.13

Fig.15

Fig.14

## REFERENCES CITED IN THE DESCRIPTION

**Patent documents cited in the description**

- US 5549002 A
- US 6877376 B1
- US 6128092 A